# EUROPEAN PATENT SPECIFICATION

(11) **EP 1 912 775 B1**
(45) Date of publication and mention of the grant of the patent: **30.12.2009**
(21) Application number: 06787362.0
(22) Date of filing: 12.07.2006
(51) Int. Cl.: B29C 47/12, B29C 47/14

(54) **EXTRUSION DIE AND PROCESS FOR PRODUCING AN EXTRUDED FILLED POLYMER COMPOSITION**
EXTRUSIONSMATRIZE UND VERFAHREN ZUM HERSTELLEN EINER EXTRUDIERTEN GEFÜLLTEN POLYMERZUSAMMENSETZUNG
FILIÈRE D'EXTRUDEUSE ET PROCÉDÉ DE PRODUCTION D'UNE COMPOSITION POLYMÈRE EXTRUDÉE-CHARGÉE

(30) Priority: 01.08.2005 US 704360 P
(43) Date of publication of application: 23.04.2008
(73) Proprietor: DOW GLOBAL TECHNOLOGIES INC., Midland MI 48674 (US)
(72) Inventor: MALONE, Bruce, A., Midland, MI 48642 (US); KOPPI, Kurt, A., Midland, MI 48640 (US)
(74) Representative: Raynor, John
(86) International application number: PCT/US2006/027442
(87) International publication number: WO 2007/015763

(56) References cited:
- EP-A1- 0 657 272
- DE-A1- 4 140 146
- DE-C- 697 675
- JP-A- 62 148 232
- US-A- 2 897 541
- US-A- 4 015 925
- US-A- 4 877 393
- US-A- 5 221 541

## Description

### BACKGROUND OF THE INVENTION

### Field of the Invention

The present invention relates to an extrusion die that contains a Flow Restriction Zone, a Flow Redistribution Zone and a Land Zone. The present invention also relates to a process that uses the extrusion die to prepare an extruded filled polymer composition having a highly dispersed and uniformly distributed filler.

### Description of Related Art

Dispersing filler into a polymer matrix, particularly when the filler and polymer are not especially compatible, has historically been challenging. The challenge increases as the amount of filler relative to matrix material increases and as product requirements dictate a highly uniform composition. Manufacturing an extruded composition comprising a hydrophilic filler dispersed in a hydrophobic polymer suffers from such a challenge since the filler and polymer are not especially compatible. The challenge is more difficult when the filler and/or matrix material has a tendency to thermally degrade, such as is the case for cellulose fillers. Manufacturing extruded compositions of wood filler in a thermoplastic matrix has extensive difficulties (see, for example, United States Patent (USP) 5,851,469 column 1, line 52 through column 2, line 25).

Despite manufacturing difficulties, an extruded composite material of wood particles in a thermoplastic polymer matrix (wood/plastic composition) is a desirable alternative to an all wood board for applications such as decking materials (for example, boards and railings). A wood/plastic composition requires less wood material per unit volume, can utilize a lower grade wood material (including recycle and waste wood materials), and can have a longer useful lifetime than an all wood alternative.

Extruded wood/plastic compositions are commercially available. However, products and literature reveal that there remains a need for a wood/plastic composition with highly dispersed and uniformly distributed wood filler and an efficient method of manufacturing such a composition.

USP 4,708,623 ('623) teaches that conventional monoaxial and biaxial extruder screw designs are insufficient for dispersing wood filler into a polymer matrix and discloses a non-conventional screw zone for the purpose of disentangling wood fibers within an extruder. '623 discloses extruding pellets of encapsulated wood filler using a multi-orifice die (stranding plate) and then refabricating those pellets into molded articles. In light of the weld lines evident in USP 5,516,472 (see below), a skilled artisan would expect the pellets of '623, having been extruded through a stranding plate, to have a non-uniform distribution of filler. Additionally, the process of extruding a filled polymer composition into pellets and then subsequently molding the composition pellets into an article is undesirably less efficient than a one-step process that compounds and extrudes a composition into an article in a single step.

USP 5,516,472 ('472) and its family members teach a method for dispersing and distributing wood filler in a thermoplastic matrix using a stranding method that requires extruding through a stranding die. However, the stranding method of '472 produces weld lines in the extruded product, which are apparent upon viewing a planed surface of the extruded product perpendicular to the product's extrusion direction (end-on). Presumably, the weld lines are a polymer rich skin around each strand which results in inhomogeneous dispersion at the strand surfaces. As a result, the products of '472 suffer from a non-homogeneous end-on appearance when planed. The extruded products of '472 also purportedly suffer from moisture absorption problems along longitudinal channels as well (see, USP 6,153,293 column 3, line 65 through column 4, line 6).

Another method for facilitating mixing of filler into an extruded polymer composition is to use a die with a compression ratio of at least 3:1. Increasing compression ratio can also increase the flexural modulus of an extruded product containing filler. A compression ratio is a ratio of the widest cross sectional area of a die to the cross sectional area of an exit orifice of the die. A die having a compression ratio of 3:1 requires a die flow channel with a cross sectional area at least three times the die's exit orifice (that is, approximately the extruded product's) cross sectional area. Unfortunately, a die producing a compression ratio of at least 3:1 can become inconveniently large when designed to manufacture products having large cross sectional areas. In addition, or as an alternative, enhancing mixing by increasing a die's compression ratio requires cooling a polymer composition to obtain elevated melt viscosity within the die, which tends to inhibit achieving quality surface appearance of a final extruded product.

US 4015925 discloses an extrusion die structure formed to provide improved flow conditions and control including equalisation of the flow of the plasticated resin material in a zone close to the lip portion of the die.

WO95/05932 discloses a process for extrusion of thermoplastic, which may include filler, through a die assembly, to form a thermoplastic product having oriented components.

An efficient method for preparing a filled polymer composition, particularly a talc or wood filled composition, that has highly dispersed and uniformly distributed filler, particularly talc or wood filler, is desirable. More desirable is a method allowing for use of a conventional extruder without needing a stranding die or a compression ratio of at least 3:1.

### BRIEF SUMMARY OF THE INVENTION

The present invention advances the art by providing an extrusion die and a process using the die that is suitable for efficiently manufacturing filled polymer compositions comprising highly dispersed and uniformly distributed wood filler in a polymer matrix directly from an extruder.

In a first aspect, the present invention an extrusion die (100) defining a Die Flow Channel (110) extending from one end (103) of the extrusion die (100) to an opposing end of the extrusion die (100) and comprising:
(a) A Flow Restriction Zone (A) defining a Restrictive Flow Channel (10) extending from an entrance orifice (12) to an exit orifice (14) on opposing ends of the Flow Restriction Zone (A), the Restrictive Flow (10) Channel having: (i) an exit orifice (14) with a cross sectional area equal to the smallest cross sectional area of the Die Flow Channel (110); and (ii) an average cross sectional area that is smaller than the circumferential area at the Restrictive Flow Channel (10) entrance end;
(b) A Flow Redistribution Zone (B) defining a Redistribution Flow Channel (20) extending from an entrance orifice (22) adjacent to the exit orifice (14) of the Restrictive Flow Channel (10) to an exit orifice (24) on an opposite end of the Flow Restrictive Zone (B), the Redistribution Flow Channel (20) being in fluid communication with the Restrictive Flow Channel (10) and initially increasing in cross sectional area from the cross sectional area of the Restrictive Flow Channel (10)'s exit orifice (14); and
(c) A Land Zone (C) defining a Land Flow Channel (30) extending from an entrance orifice (32) adjacent to the exit orifice (24) of the Redistribution Flow Channel (20)' to an exit orifice (34) on an opposite end of the Land Zone (C), the Land Flow Channel (30) being in fluid communication with the Redistribution Flow Channel (20) and varying by less than 5 percent in any cross sectional dimension at any two points between the entrance end and the exit end of the Land Zone (C);
   Wherein, the Restrictive Flow Channel (10) has a smaller average cross sectional area than the Redistribution (20) or Land Flow Channels (30); a combination of Restrictive, Redistribution, and Land Flow Channels (10, 20, 30) define the Die Flow Channel (110); the Die Flow Channel (110) provides streamline flow of polymer melt entirely through the die (100) from an entrance end (103) of the die (100), which defines the entrance orifice (12) of the Restrictive Flow Channel (10) and the die (100), to an opposing exit end (105), which defines an exit orifice of the Land Flow Channel and the die (100) and wherein the die (100) has a compression ratio of less than 3:1.

In a second aspect, the present invention is a process for extruding a filled polymer composition into an article comprising extruding a composition comprising a polymer and a filler from an extruder and through an extrusion die as claimed in claim 1. Particular embodiments of the invention are the subject of the respective dependent claims.

### BRIEF DESCRIPTION OF DRAWING

Figure (Fig.) 1 illustrates a plan view cross section of one modular die of the present invention.
Fig. 2 illustrates a side elevation cross section of the same modular die of Fig. 1.
Fig. 3 illustrates a section A-A view of the die from Fig. 1, viewing towards the extruder or entrance end of the die.
Fig. 4 illustrates a section B-B view of the die from Fig. 1, viewing away from the extruder end of the die.

### DETAILED DESCRIPTION OF THE INVENTION

### The Extrusion Die

The die of the present invention comprises three zones: (a) a Flow Restriction Zone ("Zone (a)"); (b) a Flow Redistribution Zone ("Zone (b)"); and (c) a Land Zone ("Zone (c)").

Each zone defines a flow channel (a conduit) extending all the way through the zone (that is, from one end (entrance end) to an opposing end (exit end) of the zone). Each Flow channel allows for streamline flow of polymer melt through the zone. "Polymer melt" refers to material which is ultimately extruded from the die and comprises softened polymer and additives that may be in the polymer, including filler. Streamline flow means there is an absence of "dead spots" where molecular flow stops or changes direction by 90 degrees or more. Dead spots typically arise from barriers extending perpendicular to polymer melt flow. The die zones align with one another so that Zone (b) is between Zones (a) and (c), with the entrance end of Zone (b) proximate to the exit end of Zone (a) and the entrance end of Zone (c) proximate to the exit end of Zone (b). The flow channels through each zone are in fluid communication with one another and, desirably, are coaxial to one another.

The flow channels though Zone (a) ("Restrictive Flow Channel"), Zone (b) ("Redistribution Flow Channel") and Zone (c) ("Land Flow Channel") align to form a Die Flow Channel through the die. The Die Flow Channel extends from an entrance end of the die, which is also the entrance end to Zone (a), to an exit end of the die, which is also the exit end to Zone (c). The Die Flow Channel provides streamline flow for polymer melt entirely through the die. Polymer melt enters the Die Flow Channel through an entrance orifice on the entrance end of the die and exits the Die Flow Channel through an exit orifice on the exit end of the die. In a preferred embodiment, the Die Flow channel is only accessible through the entrance and exit orifices.

The die may be a single structure or may be modular in composition. Modular refers to having components that are detachable from one another. For example, Zone (a) may be detachable from Zones (b) and (c). Zone (c) may be detachable from Zones (a) and (b). Each zone may be detachable from each of the others. The die may comprise removable (modular) components within each zone, that span more than one zone, or that reside within a single zone in combination with others that span more than one zone. Modular dies are desirable because they allow for easy and inexpensive modification of a die. For example, an artisan may desire a die to have a more or less restrictive flow through Zone (a) to optimize product properties for a particular formulation. Rather than fabricate a completely new die (*that is*, each of Zones (a), (b), and (c)), an artisan using a modular die may simply redesign and fabricate a modular component or components controlling the flow restriction in Zone (a) and then replace the original component(s) with the redesigned component(s). Modular dies can save time and money when making manufacturing modifications.

The die attaches to an extruder with the entrance end of Zone (a) proximate to the extruder. The present invention anticipates that there are numerous ways to attach the die to an extruder and that the present invention is not limited to a specific means of attachment.

Polymer melt exits the extruder through an extruder exit orifice and enters the die through a die entrance orifice. Desirably, the entrance orifice to the flow restriction channel has a circumference profile similar to an extruder exit orifice to which the die attaches. A circumference profile defines the shape and size of an orifice. The extruder exit orifice and die entrance orifice desirably have similar circumference profiles and, preferably, have identical circumference profiles. However, the extruder exit and die entrance orifices need not be identical as long as they provide streamline flow of polymer melt from the extruder exit orifice through the die entrance orifice.

*Zone (a) - The Flow Restriction Zone.* Zone (a) defines a Restrictive Flow channel that extends the length of Zone (a) - starting with an entrance orifice and ending with an exit orifice. Zone (a) extends from the die's entrance end tp where the Die Flow Channel cross sectional area increases from its smallest cross sectional area. Therefore, the exit orifice of the Restrictive Flow Channel has a cross sectional area equal to the smallest cross sectional area of the Die Flow Channel.

The purpose of Zone (a) is to create sufficient backpressure in an extruder to achieve desirable dispersion of filler in a polymer melt while avoiding sufficient backpressure to create enough heat to undesirably degrade polymer melt components. Zone (a) increases backpressure in an extruder by restricting polymer melt flow through the Restrictive Flow Channel. Flow parameters for Zone (a) control the restriction of polymer melt flow through the Restrictive Flow Channel. For example, increasing the length or decreasing the average cross sectional area of the Restrictive Flow Channel through Zone (a) will increase restriction of polymer melt flow through Zone (a). A skilled artisan can experimentally select appropriate flow parameters for Zone (a) to achieve optimal mixing with minimal degradation based on a particular polymer melt formulation.

Desirably, Zone (a) restricts polymer melt flow with a Restrictive Flow Channel having an average cross sectional area less than the circumferential area of the entrance orifice to the Restrictive Flow Channel. A "circumferential area" is the area enclosed by the circumference. In this particular case, the circumferential area of the entrance orifice to the Restrictive Flow Channel is the area within the circumference of the Restrictive Flow Channel as measured on a cross section perpendicular to polymer melt flow. The average cross sectional area of the Restrictive Flow Channel is also less than that of the Redistribution Flow Channel through Zone (b) and the Land Flow Channel through Zone (c).

Herein, the cross sectional area of an orifice or flow channel refers to an open space area (*for example*, the space through which polymer melt may flow) in a cross section perpendicular to polymer melt flow through the orifice or flow channel. Determine average cross sectional area of a flow channel by dividing its open space volume by its length (distance centrally through the flow channel from one end to an opposing end). Of note, an orifice or cross section can have a smaller "cross sectional area" than "circumferential area" since the latter is a measure of area within an orifice circumference while the former only measure the free space in the circumferential area. For example, a flow channel containing static mixer baffles will have a smaller cross sectional area than circumferential area.

In a first embodiment, the Restrictive Flow Channel comprises a first and second section. The first section of the Restrictive Flow Channel reduces in cross sectional area from that of the entrance orifice to that of a second section. The reduction may follow any dimensional contour, including an initial increase in cross sectional area followed by a reduction in cross sectional area, as long as the reduction provides for streamline flow of the polymer melt through the Restrictive Flow Channel. Typically, the first section defines a uniform and streamline taper to a cross sectional dimension of the second section in order to facilitate streamline flow of polymer melt. The second section maintains a uniform cross sectional area and has a cross sectional area equal to the smallest cross sectional area of any portion of the Die Flow Channel. The second section can be a millimeter in length or less, but typically is 2 mm or more, preferably 5 mm or more, more preferably 10 mm or more in length. The Restrictive Flow Channel terminates with the second section, which then feeds polymer melt into the Redistribution Flow Channel.

In a second embodiment, the Restrictive, Flow Channel contains one or more static mixer elements, providing the static mixer elements allow for streamline flow through the Restrictive Flow Channel. An example of a suitable static mixer element is a Kenics™ brand mixer (Kenics is a trademark of Robbins & Myers, Inc.), available from Chemineer, Inc. Another suitable static mixer is a Polyguard mixer (available from Sulzer Corp.) A static mixer can restrict polymer melt flow through a Restrictive Flow Channel even without having the Restrictive Flow Channel reduce in cross section area from that of the Restrictive Flow Channel's entrance orifice.

The first and second embodiments may be combined such that the first, second or both first and second sections of the first embodiment also contains one or more static mixer element of the second embodiment.

If the Restrictive Flow Channel is too long, a molten polymer melt will begin to thermally degrade before it can exit the die. Therefore, it is desirable that the Restrictive Flow Channel be as short as possible. Typically, the total length of the Restrictive Flow Channel is 24 inches (61 centimeters (cm)) or less, preferably 16 inches (41 cm) or less, more preferably 8 inches (20 cm) or less, and most preferably 4 inches (10 cm) or less. A Restrictive Flow Channel can have a length of 2 inches (5 cm) or less, and even one inch (2.5 cm) or less. In order to ensure sufficient backpressure, the Restrictive Flow Channel length is typically at least 0.5 inches (12.5 mm).

One desirable Restrictive Flow Channel has a circular cross section, is between one and two inches (2.5 and 5 centimeters) long, has an exit orifice that is between 0.5 and 1.5 inches (1.3 and 3.8 centimeters) in diameter and is free of static mixer elements. Ranges are inclusive of endpoints.

The cross sectional shape of the Restrictive Flow Channel is not critical and can be, for example, circular, oval, square, rectangular, pentagonal, hexagonal, heptagonal octagonal, star shaped or any other conceivable shape. The Restrictive Flow Channel cross sectional shape can be different at different points in the Restrictive Flow Channel. Desirably, the Restrictive Flow Channel has a shape that is symmetrical about an axis of polymer melt flow in order to promote a uniform flow rate in the polymer melt and ultimately improve dimensional stability in an extruded product. Preferably, the Restrictive Flow Channel has a circular cross sectional shape.

It is conceivable that Zone (a) may exist as a portion of a single die unit that also includes Zone (b) or Zone (b) and Zone (c). It is also conceivable that Zone (a) may be modular apart from Zones (b) and (c). Zone (a) may comprise multiple modular components itself. For example the first section may be part of one module die component and the second section may be part of another modular die component or a static mixer can be removable from the rest of Zone (a). In such a case, Zone (a) comprises the combination of the modular die components, or those portions of modular die components residing in Zone (a).

*Zone (b) - The Flow Redistribution Zone.* Zone (b) resides subsequent to Zone (a) in the die and serves to distribute the flow of polymer melt from the Restrictive Flow Channel to a desired final product shape defined by the Land Flow Channel. Hence, the flow channel in Zone (b), the Redistribution Flow Channel, has a profile suitable for distributing polymer melt from the Restrictive Flow Channel into the Land Flow Channel. Zone (b) begins where the Die Flow Channel increases from its smallest cross sectional area and ends where the Die Flow Channel no longer changes shape and defines a shape for a final extruded article. The average cross sectional area of the Redistribution Flow Channel is greater than that of the Restrictive Flow Channel, but less than that of the Land Flow Channel.

In one embodiment, the Redistribution Flow Channel symmetrically increases in cross sectional area (flare up symmetrically) to a cross-sectional area of a cylindrical final extruded composition. Alternatively, the Redistribution Flow Channel can have a complex cross sectional shape. One desirable Zone (b) has a Redistribution Flow Channel that flares up in cross sectional area from the Restrictive Flow Channel exit, elongates in one cross sectional dimension to form a rectangular cross section and includes a "bow-tie" or "dog-bone" cross-sectional shape for at least a portion of its length (length corresponds to an end-to-end dimension). The "bow-tie" portion distributes polymer melt flow into a board having a generally rectangular cross sectional shape. Optimal parameters for Zone (b) and the Redistribution Flow Channel depend largely on the Restrictive Flow Channel and final article shape sought with the Land Flow Channel. In general, an optimal Redistribution Flow Channel gradually changes the flow of polymer melt from the Restrictive flow channel into a shape congruent with the dimensions of the Land Flow Channel in order to achieve as close to a uniform flow rate across the Land Flow Channel as possible. At the same time, the Redistribution Flow Channel should not be so long as to cause polymer melt to reside within the die long enough to thermally degrade to an undesirable extent.

Skilled artisans can suitably design, and historically have suitably designed flow channel shapes suitable as Redistribution Flow Channels based on a final extruded article cross section they desire in order to maximize polymer melt flow distribution and minimize polymer melt dwell time in the die.

Zone (b) is desirably a modular zone, allowing for replacement of components in Zone (b) without having to replace components in Zones (a) and/or (c). A skilled artisan may desire to modify only Zone (b) when exploring different compositions of polymer melt. The different compositions may vary in, *for example*, viscosity which may dictate modifying flow distribution profiles within Zone (b) to optimize article dimensional stability. As with Zone (a), Zone (b) may comprise multiple modular components itself.

*Zone (c) - The Land Zone.* Zone (c) is the final zone of the die and serves to stabilize polymer melt into cross sectional dimensions of a final extruded article (prior to cooling of the final extruded article). Zone (c) tends to enhance dimensional stability of a final extruded article. The flow channel through Zone (c), the Land Flow Channel, remains at an essentially constant cross sectional shape throughout the length of Zone (c). That is, any dimension of the cross sectional area (that is, a dimension perpendicular to polymer melt flow) of the Land Flow Channel at any two points within Zone (c) varies by 5 percent (%) or less, preferably 2% or less, more preferably 1% or less and can be free from variation. The Land Flow Channel, and Zone (c) itself, terminates with an exit orifice for the die through which polymer melt exits the die. Zone (c) stabilizes polymer melt expansion by directing polymer melt flow more parallel with the extrusion direction.

The length of Zone (c) is desirably sufficient to maximize parallel flow of the polymer melt while keeping radial flow gradients (difference in polymer melt flow rate proximate to flow channel walls relative to flow proximate to the center of the flow channel) to a minimum. To achieve this objective, Zone (c) defines a Land Flow Channel typically having a length of 0.25 inches (6.35 mm) or more,
Preferably 0.5 inches (12.7 mm) or more, more preferably one inch (25.4 mm) or more, still more preferably 2 inches or more, even more preferably 3 inches or more and typically 10 inches (254 mm) or less, preferably 7 inches (178 mm) or less. While these length values provide general guidance, optimal lengths are best empirically determined for a specific polymer melt composition.

The Land Flow Channel can have any conceivable cross sectional shape. For example, the cross sectional shape can be square, rectangular, rectangular with rounded or bevelled corners, circular, oval, star-shaped, triangular, hexagonal, or octagonal. Particularly desirable shapes are those that correspond to wooden boards (for example, suitable as deckboard, trim, or facia), planks, rods, mandrels, railings (including profiled railings such as those with curved tops and rectilinear bottoms and variations thereof), moldings, and spindles. The Land Flow Channel desirably has a cross sectional area within ten percent of a desired final extruded product's cross sectional area.

Desired extruded products include those with quadrilateral cross sectional dimensions of 1x5/4, 2x4, 4x4, 2x6, 1x12, 3/8x12 and 2x2 as well as actual lumber sizes known by those dimensions (for example, where 2 is actually 1.5, 4 is actually 3.5, 6 is actually 5.5 and 12 is actually 11.5), where first number is thickness in inches and second number is width in inches (1 inch = 25.4 mm).

One or more walls defining the Land Flow Channel may include grooves or other shaping contours extending substantially parallel to the length of Zone (c). Such shaping contours are desirable to impart a texture to one or more surfaces of an extruded article. For example, grooves extending in one or more wall and extending in the extrusion direction can be useful to impart wood grain-like texture to extruded articles.

The die of the present invention offers advantages over present extrusion technology by enabling an artisan to precisely and efficiently control extruder backpressure to achieve optimum filler mixing in a polymer matrix while minimising thermal degradation of polymer melt components. In particular, the die of the present invention allows an artisan to highly disperse and uniformly distribute filler into a polymer matrix when the filler and polymer matrix are generally incompatible and further when one or more of the filler or polymer is thermally degradable.

As a further advantage, the die of the present invention can achieve highly dispersed and uniformly distributed filler within an extruded polymer matrix while utilising a compression ratio of less than 3:1, even less than 2:1. As a result, the present die design provides for manufacture of filled extruded polymer products having highly dispersed and uniformly distributed filler within the polymer matrix with smaller flow channel dimensions than required in a die that establishes a 3:1 or greater compression ratio. Smaller flow channel dimensions become particularly advantages when extruding products with relatively large cross sectional areas. A compression ratio of 3:1 requires a die flow channel having a cross sectional area at least three times the die's exit orifice (that is, approximately the extruded product's) cross sectional area. Therefore, dies can become inconveniently large for large cross sectional products in order to obtain a compression ratio of at least 3:1.

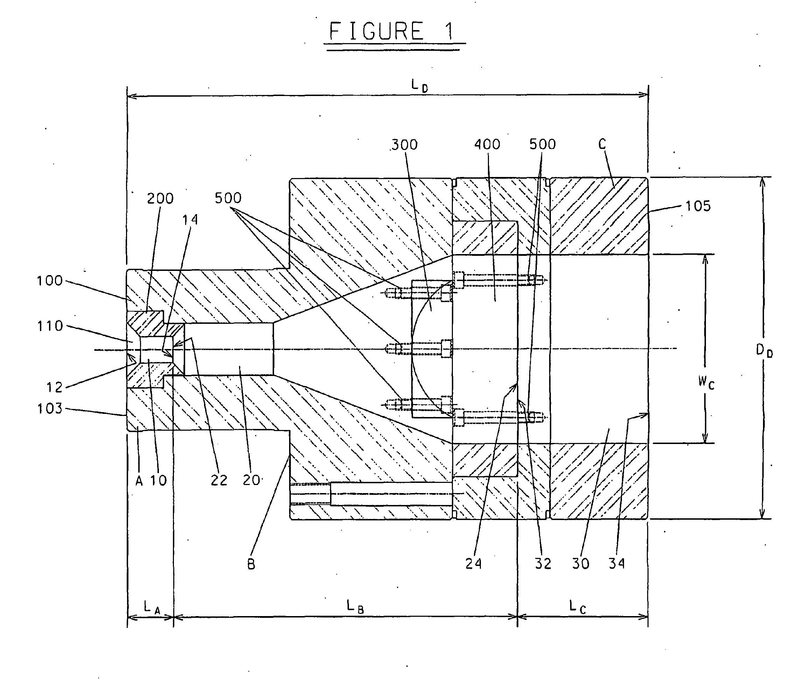

Figures 1 through 4 illustrate an exemplary die of the present invention.

Figure 1 illustrates plan view cross section of die 100, having length L_{D} between entrance end 103, exit end 105 and defining Die Flow Channel 110. Exit end 105 has a diameter D_{D}. Die 100 comprises Flow Restriction Zone A having length L_{A}, Flow Redistribution Zone B having length L_{B}, and Land Zone C having length L_{C}. Flow Restriction Zone A defines Restrictive Flow Channel 10 with entrance orifice 12 (which is also the entrance orifice to Die Flow Channel 110) and exit orifice 14. Flow Redistribution Zone B defines Redistribution Flow Channel 20 with entrance orifice 22 and exit orifice 24. Land Zone C defines Land Flow Channel 30 having entrance orifice 32 and exit orifice 34. Land Flow Channel 30 has a width of W_{C}.

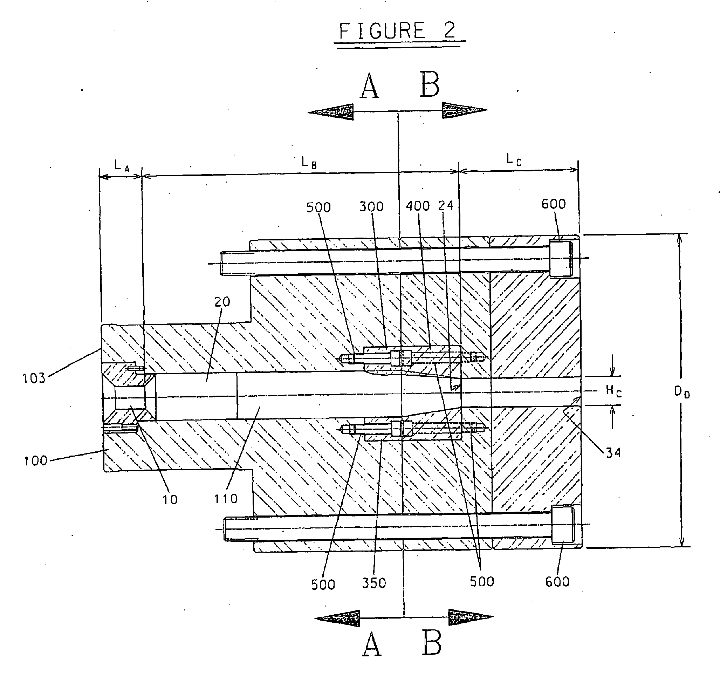

Die 100 is modular, comprising multiple removable elements. Element 200 defines Restrictive Flow Channel 10 and a flare up into Redistributive Flow Channel 20. Elements 300, 350 (shown in Fig. 2) and 400 define a half dog-bone type redistribution element in Redistribution Flow Channel 20. Elements 300, 350 (see Fig. 2) and 400 are affixed to die 100 with bolts 500.

Fig. 2 illustrates a side elevation cross sectional view of die 100 and shows bolts 600 which affix die 100 to an extruder (not shown). Fig. 2 shows Height H_{C} of exit orifice 34 for Land Flow Channel 30. Exit orifice 34 is rectangular such that W_{C} (shown in Fig. 1) is greater than H_{C} (shown in Fig. 2). Also evident by comparing Fig. 1 to Fig. 2 is the fact that Redistribution Flow Channel 20 has a circular cross section at its entrance orifice 22 (shown in Fig. 1) and a rectangular cross section at its exit orifice 24.

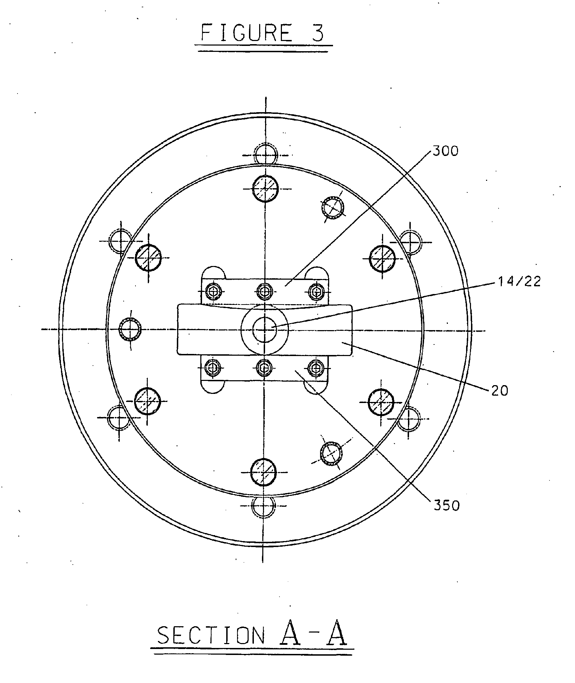

Fig. 3 illustrates cross sectional view A-A of Die 100, looking into Redistributive Flow Channel 20 towards entrance end 105 (not shown). Fig. 3 shows a portion of an orifice, which corresponds to both exit orifice 14 of Restrictive Flow Channel 10 and entrance orifice 22 of Redistribution Flow Channel 20. Element 300 has a curved profile extending into Redistributive Flow Channel 20 to assist in redistributing polymer melt.

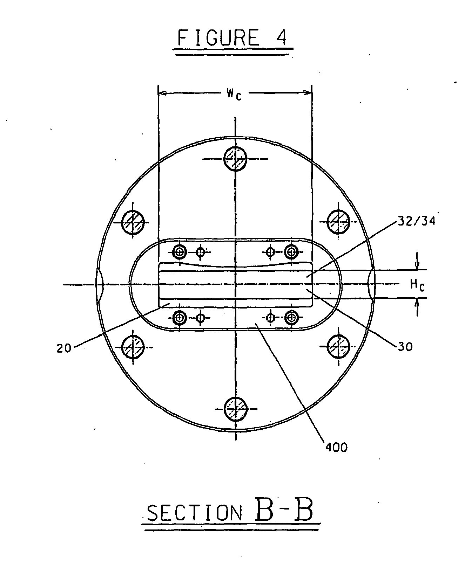

Fig. 4 illustrates cross sectional view B-B of die 100, looking into Redistribution Flow Channel 20 towards exit end 105. Fig. 4 shows Land Flow Channel 30 and its exit orifice 32 and exit orifice 34 (which overlap on this view) as well as modular component 400.

### The Extrusion Process

The present process provides an improvement over prior processes by offering a means to directly and efficiently extrude a highly filled polymer composition into an article having highly dispersed and uniformly distributed filler. The present process provides a one-step compounding and fabrication manufacturing process as opposed to multiple step process presently in the art (for example, processes that compound filled pellets and then fabricate them into articles).

A filler is uniformly distributed in a polymer matrix when, upon viewing the polymer matrix with an unaided eye, a majority of filler particles are either indiscernible within the polymer matrix or appear free from agglomeration with other filler particles.

A filler is uniformly distributed within a polymer matrix if a planed cross section of a composition appears to have a uniform distribution of filler to an unaided observer (for example, upon visual inspection without magnification). The stranding process of USP 5,516,472 produces a filled polymer composition having weld lines outlining strands apparent on a planed cross section of the polymer composition. The weld lines constitute regular local domains with lower filler concentrations than on average in the composition and, thereby, constitute regular variations in filler particle concentration in the filled polymer composition. Hence, the process of USP 5,516,472 does not produce filled polymer compositions having a uniform distribution of particles within a polymer matrix.

Fillers may be either hydrophilic or hydrophobic and either organic or inorganic. Examples of inorganic fillers include clay, Portland cement, gypsum, calcium carbonate and talc. The process of the present invention is particularly useful for extruding polymer compositions comprising a hydrophilic filler dispersed within a hydrophobic polymer matrix. The process is even more particularly useful for compositions of cellulosic filler (*for example*, wood pulp, fiber, flour) into a hydrophobic polymer matrix. Even more particularly, for dispersing 35 volume percent (vol%) or more, preferably 40 vol% or more, more preferably 45 vol% or more, even more preferably 50 vol% or more filler (including hydrophilic filler and talc) into a hydrophobic polymer matrix to form a filled composition, where vol% is relative to filled composition volume. The process of the present invention can suitably disperse more than 50 vol% filler (including hydrophilic filler and talc) into a hydrophobic polymer matrix to form a filled polymer composition but typically comprise less than 70 vol% hydrophilic filler, with vol% relative to filled composition volume. Herein, "highly filled" compositions refer to composition having 35 vol% or more filler based on composition weight.

The process of the present invention suitably incorporates any type of extruder in combination with the die of the present invention including single and twin screw extruders. Twin screw extruders include counter rotating twin screw extruders, co-rotating twin screw extruders, and conical extruders. USP 6,450,429, for example, discloses a twin screw extruder suitable for use in the present process. Conical twin screw extruders, especially counter rotating conical twin screw extruders are particularly desirable when working with thermally degradable components such as cellulosic filler. Conical twin screw extruders provide a higher degree of component mixing than single screw extruders, yet generate less heat than standard twin screw extruders.

Select a die having an entrance orifice similar in shape and size to that exit orifice of the extruder to which it attaches. Also, select a Zone (a) that provides sufficient backpressure to ensure that filler is distributed uniformly within the polymer matrix, yet not so much back pressure so as to cause undesirable degradation of the polymer or filler in the extruder or Zone (a). Use blend viscosity, polymer melt flow rate and known pressure drop and temperature models to design a Zone (a) having a suitable length and channel cross section. Optimisation with minimal empirical testing can provide a skilled artisan optimal parameters for Zone (a).

Select a die that also has a combination of Zone (b) and Zone (c) that will form an article having a suitable shape and dimensional stability in accordance with the teachings for the die, above.

Affix the die to an extruder such that Zone (a) is proximate to the extruder and Zone (c) is most remote from the extruder and so that the flow channel through the die is in fluid communication with the extruder exit orifice.

The process of extruding, apart from the selection and use of the die of the present invention, can follow that of the known art. Particularly desirable processes include those for extruding wood filler in a polymer matrix (see, for example, the process (apart from the die) of USP 5,516,472 (column 6, line 14 through column 9, line 15); and USP 5,082,605 in its entirety which utilises encapsulated wood filler. In general, feed a filler component and a polymer matrix component into an extruder, heat and mix to form a polymer melt and then extrude the polymer melt through a die to form an extruded article comprising filler dispersed in a polymer matrix.

The primary component of a polymer matrix is a thermoplastic polymer, preferably a hydrophobic polymer such as polyethylene, polypropylene and polyvinyl chloride. Herein, polyethylene refers to any homo- or copolymer that contains more than 50% polymerized ethylene units based on total monomer units. Exemplary polyethylenes are low density polyethylene (LDPE) and high density polyethylene (HDPE). Similarly, polypropylene refers to homo- and copolymers that contain more than 50% polymerized propylene units based on total monomer units. Particularly desirably polymers for use as a polymer matrix in the process of the present invention are HDPE, polypropylene, and polyvinyl chloride.

Any fillers are suitable for use in the present invention. The process is particularly useful for dispersing hydrophilic fillers in a hydrophobic polymer matrix. Hydrophilic fillers tend to resist dispersing in a hydrophobic polymer matrix and, as a result, tend to agglomerate within the polymer matrix. The present process enables formation of polymer compositions containing highly dispersed and uniformly distributed filler by providing a desirable balance of dispersing action with detrimental aspects of extensive heating (*for example*, thermal degradation), even when using hydrophilic fillers in hydrophobic polymers. Examples of typical hydrophilic fillers suitable for use in the present invention include cellulosics such as wood flour, wood pulp, wood fiber.

Generally, add filler to an extruder with, subsequent to, or both with and subsequent to adding polymer matrix material to the extruder. Filler can be added by itself or in the form of a concentrate, for example, pellets comprising filler encapsulated in a polymer matrix.

In addition to polymer for the polymer matrix and fillers, the process of the present invention can include addition of additives such as lubricants such as metal stearates and fatty acid esters; inorganic fillers such as talc and calcium carbonate; colorants; ultraviolet stabilizers; biocides; fungicides; impact modifiers; reinforcing fiber (for example, glass and wollastonite); hollow glass spheres; layered silicates; and coupling agents.

### Filled Polymer Composition

The process of the present invention is able to produce an extruded highly filled polymer composition that can comprise a hydrophilic filler highly dispersed and uniformly distributed within a hydrophobic polymer matrix. The filler can comprise 35 vol% or more, 40 vol% or more, 50 vol% or more, even 60 vol% or more of a filled polymer composition based on filled polymer composition volume. Preferably, the filler is a cellulosic material. More preferably, the filler is wood flour, wood pulp, wood fibers, wood flakes or any combination thereof. Most preferably, the filler is wood flour. The polymer is desirably polyethylene, polypropylene, or polyvinyl chloride, preferably the polyethylene is HDPE. One highly desirably filled polymer composition comprises wood flour highly dispersed and uniformly distributed in polyethylene and extruded into the shape of a board.

Composites of the present invention have utility as, for example, decking materials, fence materials, and any use where wood boards, dowels, planks and poles currently have utility.

### EXAMPLES

The following examples serve to illustrate specific embodiments of the present invention. For each example use an 86 millimetre conical twin screw extruder (for example, TC86 from Milacron) and attach a die similar to that of die 100 in Figures 1-4 to the extruder using a Milacron entry adapter (also known as a universal adapter flange). The universal adapter flange reduces the cross section of the extruder to that of the entrance orifice of the die. For the sake of the description in Figures 1-4, consider the adapter flange as part of the extruder. Example 1.

The die has a length L_{D} of 16 inches (406 mm) and a diameter at its exit end of 10 inches (254 mm). The length L_{A} of the Flow Restriction Zone A is 1.4 inches (3.6 cm). The length L_{S} of Flow Redistribution Zone B is 10.6 inches (26.9 cm). The length L_{C} of Land Zone C is 4 inches (10 cm).

The die has an entrance orifice 12 that is 1.57 inches (40 mm) in diameter. Exit orifice 14 has a diameter of 0.75 inches (19 mm). Redistribution Flow Channel 20 symmetrically flares to a diameter of 1.5 inches (38 mm) before becoming rectangular. Land Flow Channel 30 has a width, W_{C}, of 5.50 inches (140 mm) and a height, H_{C}, of 0.94 inches (24 mm). Elements 300 and 350 reduce the height of Redistributive Flow Channel 20 and are 3.3 inches (8.4 cm) long. Elements 300 and 400 protrude into Redistribution Flow Channel 20 with a symmetrical bulge (half dog-bone profile) centred across the Channel's width and having a maximum protrusion corresponding to a 4 inch (10 cm) wide portion of a 14.5 inch (36.8 cm) radius curve. Element 350 does not protrude into Redistribution Flow Channel 20 beyond tapering to a narrower height uniformly across the Channel's width.

**Table 1.**

| **Component** | **Concentration** |
|---|---|
| 60 mesh multispecies pine from American Wood Fiber ("Wood Component") | 55 weight (wt)% |
| HDPE (HDPE-6000 from The Dow Chemical Company) | 27 wt% |
| AMPLIFY™ GR-205 functional polymer (The Dow Chemical Company) | 2 wt% |
| Tinuvin™ 783 and 328 (CIBA) | 2 wt% |
| WP-2200 (available from AONZA) | 3.5 wt% |
| Colorant (CIBA grey colorant number 05-1435AF) | 3 wt% |
| Irgaguard™ F-3000 (available from CIBA) | 2.5 wt% |
| Talc | 5 wt% |

| | |
|---|---|
| *AMPLIFY is a trademark of The Dow Chemical Company *Tinuvin is a trademark of Ciba Specialty Chemical Corporation *Irgaguard is a trademark of Ciba Specialty Chemical Corporation | |

Dry the Wood Component to 1-2 wt% moisture (based on Wood Component weight) and then add the components of Table 1 individually to the feed section of the twin screw extruder at the indicated concentrations to form a filled polymer composition (weight percent based on total filled composition weight). Mix the components together in the extruder at a temperature of 350 degrees Fahrenheit (177 degrees Celsius) in order to achieve the filled composition. No precompounding of the wood component (60 mesh multi species pine) with the polymer component (HDPE) is necessary.

Extrude the filled polymer composition through the die while maintaining a temperature of 350 degrees Fahrenheit (177 degrees Celsius) at a rate of 850 pounds per hour (386 kilograms per hour) with a screw rate of 32 revolutions per minute to obtain an extrusion outlet pressure (pressure at extruder exit orifice) of 1950 pounds per square inch (13 MegaPascals). The resulting article, after cooling is a board that is 0.92 inch (2.3 cm) thick and 5.375 inches (13.7 cm) wide. The board is free of visually apparent wood agglomerates greater than about 1 mm and free of visually apparent swirls of unmixed components upon viewing a planed end of the board.

The die of Example 1 is an example of the die of the present invention that has a compression ratio of 1.7. Compression ratio, again, is the ratio of the widest cross sectional area of the die's flow channel to the dies exit orifice. The process of Example 1 is an example of the process of the present invention using a die having a compression ratio of 1.7 and that produces uniform mixing of cellulosic additives in a hydrophobic polymer matrix.

### Example 2.

Prepare Example 2 using the formulation and process of Example 1, except use an Element 200 in the die that is longer and defines a larger Restrictive Flow Channel than in the die of Example 1. The different Element 200 modifies the die so that the length L_{A} of the Flow Restriction Zone A is 5 inches (13 cm), the length L_{B} of Flow Redistribution Zone B is 7 inches (18 cm) and the Restrictive Flow Zone exit orifice 14 has a diameter of one inch (25 mm).

The die and process of Example 2 create a board similar to that of Example 1. The die of Example 2 is an example of the die of the present invention and the process of Example 2 is an example of the process of the present invention.

### Comparative Example A

Prepare a filled composition using the same procedure, extruder and die as in Example 2, except remove Element 200 from.the die (thereby eliminating the Flow Restriction Zone). Use the components and concentrations of Table 2 to form the filled composition of Comparative Example A.

**Table 2.**

| **Component** | **Concentration** |
|---|---|
| 60 mesh multispecies pine from American Wood Fiber ("Wood Component") | 55 wt% |
| HDPE (HDPE -6000) | 30.5 wt% |
| AMPLIFY GR-205 functional Polymer | 2 wt% |
| WP-2200 | 3.5 wt% |
| Colorant (CIBA grey colorant number 05-1435AF) | 2 wt% |
| Irgaguard F-3000 | 2 wt% |
| Talc | 5 wt% |

As in Example 2, dry the Wood Component to a 1-2 wt% moisture content (based on Wood Component weight) and add the components individually to the extruder to prepare a filled polymer composition. Extrude the filled polymer composition through the die at a flow rate of 1013 pounds per hour (460 kilograms per hour) using a screw rate of 32 revolutions per minute to achieve an extrusion outlet pressure (pressure at extruder exit orifice) of 1560 pounds per square inch (11 MegaPascals). The resulting one inch (2.54 cm) by 5.375 inch (13.7 cm) board reveals poor internal mixing of components with wood agglomerates greater than one mm and swirls of unmixed components visually apparent. Changing extrusion temperatures and rates do not eliminate the agglomerates and swirls.

Example 2 and Comparative Example A reveal that a Flow Restriction Zone in the extrusion die increases extrusion outlet pressure and produces a more highly dispersed filler within a filled polymer composition than a die without a Flow Restriction Zone. Differences in composition formulation between Example 2 and Comparative Example A should have no influence on the extrusion outlet pressure or extent of filler dispersion in an extruded board.

Example 2 further illustrates a process of the present invention using a die having a compression ratio of 1.7 that produces uniform mixing of cellulosic additives in a hydrophobic polymer matrix.

## Claims

1. An extrusion die (100) defining a Die Flow Channel (110) extending from one end (103) of the extrusion die (100) to an opposing end of the extrusion die (100) and comprising:
(a) A Flow Restriction Zone (A) defining a Restrictive Flow Channel (10) extending from an entrance orifice (12) to an exit orifice (14) on opposing ends of the Flow Restriction Zone (A), the Restrictive Flow (10) Channel having: (i) an exit orifice (14) with a cross sectional area equal to the smallest cross sectional area of the Die Flow Channel (110); and (ii) an average cross sectional area that is smaller than the circumferential area at the Restrictive Flow Channel (10) entrance end;
(b) A Flow Redistribution Zone (B) defining a Redistribution Flow Channel (20) extending from an entrance orifice (22) adjacent to the exit orifice (14) of the Restrictive Flow Channel (10) to an exit orifice (24) on an opposite end of the Flow Restrictive Zone (B), the Redistribution Flow Channel (20) being in fluid communication with the Restrictive Flow Channel (10) and initially increasing in cross sectional area from the cross sectional area of the Restrictive Flow Channel (10)'s exit orifice (14); and
(c) A Land Zone (C) defining a Land Flow Channel (30) extending from an entrance orifice (32) adjacent to the exit orifice (24) of the Redistribution Flow Channel (20) to an exit orifice (34) on an opposite end of the Land Zone (C), the Land Flow Channel (30) being in fluid communication with the Redistribution Flow Channel (20) and varying by less than 5 percent in any cross sectional dimension at any two points between the entrance end and the exit end of the Land Zone (C);
Wherein, the Restrictive Flow Channel (10) has a smaller average cross sectional area than the Redistribution (20) or Land Flow Channels (30); a combination of Restrictive, Redistribution, and Land Flow Channels (10, 20, 30) define the Die Flow Channel (110); the Die Flow Channel (110) provides streamline flow of polymer melt entirely through the die (100) from an entrance end (103) of the die (100), which defines the entrance orifice (12) of the Restrictive Flow Channel (10) and the die (100), to an opposing exit end (105), which defines an exit orifice of the Land Flow Channel and the die (100) and wherein the die (100) has a compression ratio of less than 3:1.

2. The die (100) of Claim 1, wherein the Die Flow Channel (110) through (a), (b), and (c) is accessible by only two openings, one at the entrance end (103) and one at the exit end (105) of the die (100).

3. The die (100) of Claim 1, wherein the die (100) comprises at least one modular component.

4. The die (100) of Claim 3, wherein at least one of the Flow Restriction Zone (A), the Flow Redistribution Zone (B) and the Land Zone (C) comprises a modular component.

5. The die (100) of Claim 1, wherein the die (100) has a compression ratio of less than 2:1.

6. The die (100) of Claim 1, wherein the Flow Restriction Zone
(A) has a length of 10 centimeters (4 inches) or less.

7. The die (100) of Claim 1, wherein the Restrictive Zone Channel (10) has a circular cross section at any point in the Flow Restriction Zone (A).

8. The die (100) of Claim 7, wherein the Flow Redistribution Zone (B) distributes polymer melt from the Restrictive Flow Channel (10) into a rectangular Land Flow Channel (30).

9. The die (100) of Claim 1, wherein the Land Flow Channel (30) has at least one wall with grooves that extend in the extrusion direction of the land Flow Channel (30).

10. The die (100) of Claim 1, wherein the Restrictive Flow Channel (10) contains static mixing baffles that allow for streamline flow through the Restrictive Flow Channel (10).

11. The die (100) of Claim 1, wherein the Restrictive Flow Channel (10) is free of static mixing baffles.

12. The die (100) of Claim 1, wherein the Restrictive Flow Channel (10) has a circular cross section, is between 2.5 and 5 centimeters (cm) (one and two inches) long, has an exit orifice (14) that is between 1.3 and 3.8 cm (0.5 and 1.5 inches) in diameter and is free of static mixing elements.

13. A process for extruding a filled polymer composition into an article, the process comprising extruding a composition comprising a polymer and a filler from an extruder and through an extrusion die (100) as claimed in Claim 1.

14. The process of Claim 13, wherein the filler is selected from a group consisting of mica, talc and cellulosic materials.

15. The process of Claim 13, wherein the filled polymer composition contains 40 volume percent or more filler based on total filled polymer composition volume.

16. The process of Claim 15, wherein the filler is hydrophilic and the polymer is polyethylene or polypropylene.

17. The process of Claim 16, wherein the polymer is high density polyethylene.

18. The process of Claim 13, wherein the extruder is a conical dual screw extruder.

19. The process of Claim 13, wherein the extrusion die (100) has a Restrictive Flow Channel (10) that has a circular cross section, is between 2.5 and 5 cm (one and two inches) long, has an exit orifice (14) that is between 1.3 and 3.8 cm (0.5 and 1.5 inches) in diameter and is free of static mixer elements.

20. The process of Claim 13, wherein the die (100) is the die (100) of Claim 10.

## Patentansprüche

1. Extrusionswerkzeug (100), welches einen Fließkanal (110) definiert, der sich von einem Ende (103) des Extrusionswerkzeugs (100) zu einem gegenüberliegenden Ende des Extrusionswerkzeugs (100) erstreckt, umfassend:
a) eine Drosselzone (A), die einen Drosselkanal (10) definiert, der sich von einer Eintrittsöffnung (12) bis zu einer Austrittsöffnung (14) an gegenüberliegenden Enden der Drosselzone (A) erstreckt, wobei der Drosselkanal (10) folgendes umfasst:
(i) eine Austrittsöffnung (14) mit einer Querschnittsfläche, die der kleinsten Querschnittsfläche des Fließkanals (110) entspricht; und
(ii) einer durchschnittlichen Querschnittsfläche, welche kleiner als die Umfangsfläche am Eingang des Drosselkanals (10) ist;
b) eine Durchflussumverteilerzone (B), die einen Umverteilerfließkanal (20) definiert, der sich von einer Eintrittsöffnung (20), welche an die Austrittsöffnung (14) des Drosselkanals (10) angrenzt, bis zu einer Austrittsöffnung (24) am gegenüberliegenden Ende der Drosselzone (B) erstreckt, wobei der Umverteilerfließkanal (20) mit dem Drosselkanal (10) kommuniziert und dessen Querschnittsfläche anfänglich ausgehend von der Querschnittsfläche der Austrittsöffnung (14) des Drosselkanals (10) zunimmt; und
c) eine Austrittszone (C) [Land Zone], die einen Austrittsfließkanal (30) definiert, der sich von einer Eintrittsöffnung (32) angrenzend an die Austrittsöffnung (24) des Umverteilerfließkanals (20) zu einer Austrittsöffnung (34) an einem gegenüberliegenden Ende der Austrittszone (C) erstreckt, wobei der Austrittsfließkanal (30) mit dem Umvertellerfließkanal (20) kommuniziert und die Abweichung der Querschnittsdimensionen an beliebigen zwei Punkten zwischen dem Eintrittsende und dem Austrittsende der Austrittszone (C) weniger als 5% betragen;
wobei der Drosselkanal (10) eine geringere durchschnittliche Querschnittsfläche als der Umverteilerfließkanal (20) oder der Austrittsfließkanal (30) aufweist; eine Kombination von Drossel-, Umverteiler- und Austrittsfließkanälen (10, 20, 30) den Fließkanal (110) des Extrusionswerkzeugs definiert; der Fließkanal (110) einen stromlinienförmigen Durchfluss einer Polymerschmelze durch das gesamte Extrusionswerkzeug (100) ermöglicht, ausgehend von einem Eintrittsende (103) des Extrusionswerkzeugs (100), welches die Eintrittsöffnung (12) des Drosselkanals (10) definiert, bis zu einem gegenüberliegenden Austrittsende (105), welches eine Austrittsöffnung des Austrittsfließkanals und des Extrusionswerkzeugs (100) definiert und wobei das Extrusionswerkzeug ein Verdichtungsverhältnis von weniger als 3:1 aufweist.

2. Extrusionswerkzeug (100) nach Anspruch 1, bei welchem der Fließkanal (110) durch (a), (b) und (c) über nur zwei Öffnungen, eine am Eintrittsende (103) und eine am Austrittsende (5) des Extrusionswerkzeugs (100), zugänglich ist.

3. Extrusionswerkzeug (100) nach Anspruch 1, welches wenigstens ein modulares Bauteil umfasst.

4. Extrusionswerkzeug nach Anspruch 3, bei welchem wenigstens eine der Zonen aus Drosselzone (A), Durchflussumverteilerzone (B) und Austrittszone (C) ein modulares Bauteil umfasst.

5. Extrusionswerkzeug (100) nach Anspruch 1, mit einem Verdichtungsverhältnis von weniger als 2:1.

6. Extrusionswerkzeug (100) nach Anspruch 1, bei welchem die Drosselzone eine Länge von 4 Zoll (10 Zentimeter) oder weniger aufweist

7. Extrusionswerkzeug (100) nach Anspruch 1, bei welchem der Drosselkanal an jeder Stelle der Drosselzone (A) einen runden Querschnitt aufweist.

8. Extrusionswerkzeug (100) nach Anspruch 7, bei welchem die Durchflussumverteilerzone (B) Polymerschmelze aus dem Drosselkanal (C) in einen rechteckigen Austrittsfließkanal (30) verteilt.

9. Extrusionswerkzeug (100) nach Anspruch 1, bei welchem der Austrittsfließkanal (30) wenigstens eine Wandung mit Nuten aufweist, welche sich in Extrusionsrichtung des Austrittsfließkanals (30) erstrecken.

10. Extrusionswerkzeug nach Anspruch 1, bei welchem der Drosselkanal (10) statische Mischeinbauten umfasst, welche einen stromlinienförmigen Durchfluss durch den Drosselkanal (10) ermöglichen.

11. Extrusionswerkzeug (100) nach Anspruch 1, bei welchem der Drosselkanal (10) frei von statischen Mischeinbauten ist.

12. Extrusionswerkzeug (100) nach Anspruch 1, bei welchem der Drosselkanal einen kreisförmigen Querschnitt aufweist, zwischen 2,5 und 5 Zentimeter (1 und 2 Zoll) lang ist, eine Austrittsöffnung (14) aufweist, die zwischen 1,3 und 3,8 Zentimeter (0,5 und 1,5 Zoll) Durchmesser aufweist und frei von statischen Mischelementen ist.

13. Verfahren zum Extrudieren einer gefüllten Polymerzusammensetzung zu einem Erzeugnis, wobei das Verfahren die Extrusion einer Zusammensetzung umfassend ein Polymer und einen Füllstoff aus einem Extruder und durch ein Extrusionswerkzeug (100) nach Anspruch 1 umfasst.

14. Verfahren nach Anspruch 13, bei welchem der Füllstoff aus einer Gruppe ausgewählt ist, die Glimmer, Talkum und zellulosehaltige Materialien umfasst.

15. Verfahren nach Anspruch 13, bei welchem die gefüllte Polymerzusammensetzung wenigsten 40 Vol.-% oder mehr Füllstoff beinhaltet, bezogen auf das gesamte Volumen der gefüllten Polymerzusammensetzung.

16. Verfahren nach Anspruch 15, bei welchem der Füllstoff hydrophil ist und das Polymer ein Polyethylen oder ein Polypropylen ist.

17. Verfahren nach Anspruch 16, bei welchem das Polymer ein HDPE (high density polyethylene) ist.

18. Verfahren nach Anspruch 13, bei welchem der Extruder als konischer Doppelschneckenextruder ausgebildet ist.

19. Verfahren nach Anspruch 13, bei welchem das Extrusionswerkzeug einen Drosselkanal (10) aufweist, welcher einen kreisrunden Querschnitt besitzt, welcher zwischen 2,5 und 2 Zentimetern (1 und 2 Zoll) lang ist, welcher eine Austrittsöffnung (14) aufweist, die zwischen 1,3 und 3,8 Zentimetern (0,5 und 1,5 Zoll) Durchmesser aufweist und frei von statischen Mischelementen ist.

20. Verfahren nach Anspruch 13, bei welchem das Extrusionswerkzeug dasjenige nach Anspruch 10 ist.

## Revendications

1. Filière d'extrusion (100) définissant un canal d'écoulement de filière (110) qui s'étend depuis une (103) des extrémités de la filière d'extrusion (100) jusqu'à l'extrémité opposée de la filière d'extrusion (100) et comprenant :
(a) une zone (A) de restriction de l'écoulement qui définit un canal de restriction d'écoulement (10) s'étendant depuis un orifice d'entrée (12) jusqu'à un orifice de sortie (14) qui sont situés à des extrémités opposées de la zone (A) de restriction de l'écoulement, le canal de restriction d'écoulement (10) comportant : (i) un orifice de sortie (14) dont la surface de section transversale est égale à la plus faible surface de section transversale du canal d'écoulement de filière (110) ; et (ii) une surface de section transversale moyenne qui est inférieure à la surface circonférentielle au niveau de l'extrémité d'entrée du canal de restriction d'écoulement (10) ;
(b) une zone de redistribution d'écoulement (B) définissant un canal d'écoulement de redistribution (20) et s'étendant depuis un orifice d'entrée (22) adjacent à l'orifice de sortie (14) du canal de restriction d'écoulement (10) jusqu'à un orifice de sortie (24) situé à une extrémité opposée de la zone de restriction de l'écoulement (B), le canal de redistribution d'écoulement (20) étant en communication pour les fluides avec le canal de restriction d'écoulement (10) et sa surface de section transversale augmentant initialement à partir de la surface de section transversale de l'orifice de sortie (14) du canal de restriction d'écoulement (10) ; et
(c) une zone non restrictive (C) définissant un canal d'écoulement non restreint (30) qui s'étend depuis un orifice d'entrée (32) adjacent à l'orifice de sortie (24) du canal d'écoulement de redistribution (20) jusqu'à un orifice de sortie (34) située à une extrémité opposée de la zone non restrictive (C), le canal d'écoulement non restreint (30) étant en communication pour les fluides avec le canal d'écoulement de redistribution (20) et variant de moins de 5 pour cent dans n'importe quelle dimension de section transversale au niveau de deux points quelconque entre l'extrémité d'entrée et l'extrémité de sortie de la zone non restrictive (C) ;
dans laquelle le canal de restriction d'écoulement (10) a une surface de section transversale moyenne inférieure à celle des canaux de redistribution (20) ou d'écoulement non restreint (30) ; une combinaison des canaux de restriction d'écoulement, de redistribution d'écoulement, et d'écoulement non restreint (10, 20, 30) définissant le canal d'écoulement de filière (110) ; le canal d'écoulement de filière (110) procurant un écoulement régulier de polymère fondu à travers toute la filière (100) depuis une extrémité d'entrée (103) de la filière (100) qui définit l'orifice d'entrée (12) du canal de restriction d'écoulement (10) de la filière (100) jusqu'à une extrémité de sortie opposée (105) qui définit un orifice de sortie du canal d'écoulement non restreint de la filière (100), et la filière (100) ayant un rapport de compression inférieure à 3/1.

2. Filière (100) selon la revendication 1, dans laquelle le canal d'écoulement de filière (110) passant par (a), (b) et (c) n'est accessible que par deux ouvertures, une à l'extrémité d'entrée (103) et une à l'extrémité de sortie (105) de la filière (100).

3. Filière (100) selon la revendication 1, dans laquelle la filière (100) comprend au moins un composant modulaire.

4. Filière (100) selon la revendication 3, dans laquelle au moins une des zones, la zone de restriction de l'écoulement (A), la zone de redistribution de l'écoulement (B) et la zone non restrictive (C), comprend un composant modulaire.

5. Filière (100) selon la revendication 1, dans laquelle la filière (100) a un rapport de compression inférieur à 2/1.

6. Filière (100) selon la revendication 1, dans laquelle la zone de restriction de l'écoulement (A) a une longueur inférieure ou égale à 10 centimètres (4 pouces).

7. Filière (100) selon la revendication 1, dans laquelle le canal de zone de restriction (10) a une section transversale circulaire en n'importe quel point de la zone de restriction de l'écoulement (A).

8. Filière (100) selon la revendication 7, dans laquelle la zone de redistribution d'écoulement (B) distribue du polymère fondu depuis le canal de restriction d'écoulement (10) jusque dans un canal d'écoulement non restreint (30) rectangulaire.

9. Filière (100) selon la revendication 1, dans laquelle le canal d'écoulement non restreint (30) a au moins une paroi comportant des rainures qui s'étendent dans la direction d'extrusion du canal d'écoulement non restreint (30).

10. Filière (100) selon la revendication 1, dans laquelle le canal de restriction d'écoulement (10) est doté de chicanes de mélange statiques qui permettent un écoulement régulier à travers le canal de restriction d'écoulement (10).

11. Filière (100) selon la revendication 1, dans laquelle le canal de restriction d'écoulement (10) est exempt de chicanes de mélange statiques.

12. Filière (100) selon la revendication 1, dans laquelle le canal de restriction d'écoulement (10) a une section transversale circulaire, une longueur comprise entre 2,5 et 5 centimètres (cm) (un et deux pouces), un orifice de sortie (14) qui a un diamètre compris entre 1,3 et 3,8 cm (0,5 et 1,5 pouce) et est exempt d'éléments de mélange statiques.

13. Procédé d'extrusion d'une composition de polymère chargé dans un article, le procédé comprenant le fait d'extruder une composition comprenant un polymère et une charge à partir d'une extrudeuse et à travers une filière d'extrusion (100) selon la revendication 1.

14. Procédé selon la revendication 13, dans lequel la charge est choisie dans un groupe qui comprend le mica, le talc et des matériaux cellulosiques.

15. Procédé selon la revendication 13, dans lequel la composition de polymère chargé contient 40 pour cent en volume, ou plus, de charge par rapport au volume total de la composition de polymère chargé.

16. Procédé selon la revendication 15, dans lequel la charge est hydrophile et le polymère est du polyéthylène ou du polypropylène.

17. Procédé selon la revendication 16, dans lequel le polymère est du polyéthylène haute densité.

18. Procédé selon la revendication 13, dans lequel l'extrudeuse est une extrudeuse conique à deux vis.

19. Procédé selon la revendication 13, dans lequel la filière d'extrusion (100) comporte un canal de restriction d'écoulement (10) qui a une section transversale circulaire, une longueur comprise entre 2,5 cm et 5 cm (un et deux pouces), un orifice de sortie (14) dont le diamètre est compris entre 1,3 cm et 3,8 cm (0,5 et 1,5 pouce) et est exempt d'éléments de mélange statiques.

20. Procédé selon la revendication 13, dans lequel la filière (100) est la filière (100) selon la revendication 10.
